# EUROPEAN PATENT APPLICATION

(11) **EP 4 681 936 A1**
(43) Date of publication of application: **21.01.2026**
(21) Application number: 25186704.0
(22) Date of filing: 01.07.2025
(51) Int. Cl.: B42D 25/485, G06F 21/31, G06F 21/62, H04L 9/32

(54) **METHOD OF CERTIFIED GENERATION OF PHOTOGRAPHS AND RELATED PHOTOGRAPHIC AND TRANSMITTING APPARATUS**

(30) Priority: 15.07.2024 IT 202400016360
(71) Applicant: Dedem S.p.A., 00072 Ariccia RM (IT)
(72) Inventor: LAMA, Federico, Roma RM (IT); MIRANTE, Paolo, Roma RM (IT); GUIDO, Vittorio, Velletri RM (IT)
(74) Representative: Barbaro, Gaetano

(57) **Abstract**

This disclosure provides a certified generation process of photographs using an innovative automatic photographic apparatus, which allows the authority to receive photographs of certified origin in digital format without necessarily having to deliver by hand a print on photographic paper of the photograph itself in passport size to the authority counter.

A photographic apparatus, which may be for example an automatic photo booth, as well as a telematically connected hardware system for certified acquisition of photographs are also disclosed.

## Description

### TECHNICAL FIELD

The present invention relates in general to cameras for photographs to be used in identity documents, and more particularly to a photographic apparatus, for example of the self-service automatic photo booth type, and to a method for the certified generation of photographs, in particular photographs of the type for identity documents.

### BACKGROUND

Passport-type photographs can be used in documents or certificates to prove one's identity, such as driving licenses, passports or identity cards. These photographs are commonly taken in automatic photo booths, which provide photographs with the required definition and size suitable for use in official documents. Currently, these passport-type photographs must be printed before being provided directly by the citizen who must appear before the authority that must issue the identity document. Before the authority, a public official verifies that the photograph corresponds to the face of the citizen requesting the identity document and proceeds to scan the photograph and record other identifying data. However, this operation takes time and requires public offices to equip themselves with high-resolution scanners to digitize small images with a definition that can allow the correct functioning of facial recognition algorithms, which are increasingly used in airports or ports to control the transit of passengers entering or leaving a country. Since the photographs are provided to the authority when they have already been printed on photographic paper in a relatively small format, there is still the risk of not being able to digitally acquire the photographic image with a definition sufficient to guarantee the correct functioning of automatic facial recognition systems.

### SUMMARY

In order to at least partially overcome these drawbacks, the present disclosure provides a certified photo generation process using an innovative automatic photographic apparatus, which allows the authority to receive photographs of certified origin in digital format, without necessarily having to deliver by hand a print on photographic paper of the photograph itself in passport-sized format to the authority counter. This excellent result is obtained through the certified photo generation process defined in the attached claims.

The process of this disclosure can be performed with a photographic apparatus, comprising:
a camera configured to generate image files of quality equal to or higher than a minimum definition of photographs for identity documents, wherein the camera is also configured to take a passport-sized photograph, compliant with the International standards required for issuing documents compliant with ICAO 9303 and ISO/IEC 19794-5, in force on 1 January 2025, to a user placed in front of the camera and to generate a corresponding image file;
a control unit configured to receive the digital image captured by said camera and, optionally, to control in synchronous or asynchronous mode, a print of the digital image on photographic paper, respectively if the photographic apparatus is a self-service automatic photo booth or is a photographic studio device;
a microprocessor-based electronic authentication device, configured to:
   - store a private key generated by a device manager,
   - store an electronic certificate issued by an authority,
   - encrypt the image file with the certificate and the private key, generating a corresponding encrypted file;
an interface configured to connect the electronic authentication device to a server;
wherein the control device is configured to communicate with the connected server through the interface to transmit the encrypted file generated by the microprocessor-based electronic authentication device and receive information on a result of a verification of integrity criteria of the transmitted encrypted file.

Further embodiments are defined in the attached claims.

### BRIEF DESCRIPTION OF THE DRAWINGS

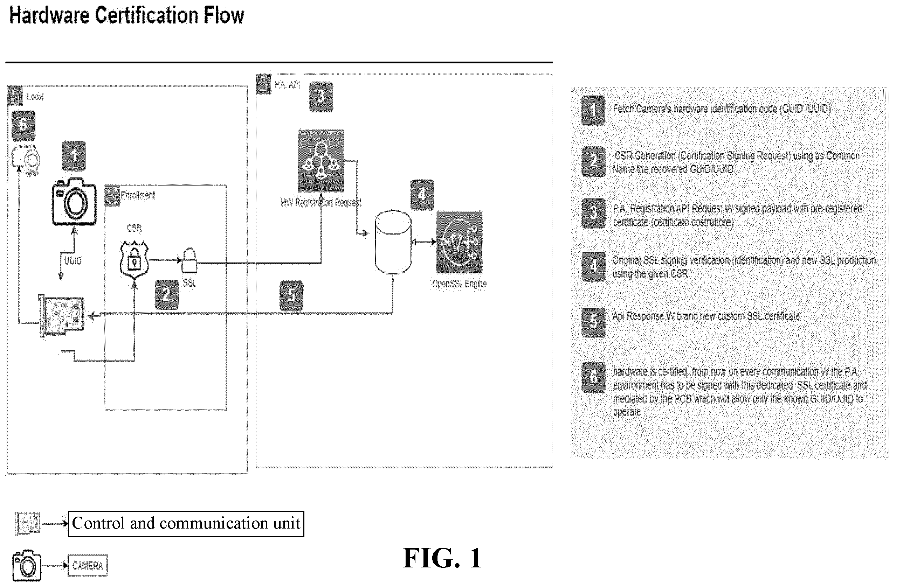

Figure 1 schematically illustrates an example of how a photographic apparatus can be certified according to this disclosure in the Public Administration information system.

### DESCRIPTION OF ILLUSTRATIVE EMBODIMENTS

A general scheme of how a camera of this disclosure is certified at the information system of the Public Administration, to transmit photographs in a certified manner, will be illustrated below with reference to figure 1.

| | |
|---|---|
| **1** | Fetch Camera's hardware identification code (GUID/UUID) |
| **2** | CSR (Certification Signing Request) generation using as Common Name the recovered GUID/UUID |
| **3** | P.A. Registration API Request with signed payload with pre-registered certificate |
| **4** | Original signing verification (identification) protocol and new production of a certificate (e.g. SSL) using the given CSR |
| **5** | API response with brand new custom SSL certificate |
| **6** | Hardware is certified. Fron now on every communication with the P.A. environment has to be signed with this dedicated SSL certificate and mediated by the PCB which allows only the known GUID/UUID to operate |

To implement it, a camera is needed, which can be for example a self-service photo booth or can also be a camera installed in a photography studio, comprising:
- a camera configured to generate image files with pixel definition equal to or higher than a minimum definition of photographs for identity documents, for example of quality compliant with the ICAO 9303, ISO/IEC 19794-5 standards in force on 1 January 2025,
- a control unit of the device configured to receive at least one digital image captured by the camera,
- a microprocessor-based electronic authentication device.
- an interface configured to connect the electronic authentication device to a remote server.

If the camera is an automatic photo booth, then there will also be a printer to print the image file on photographic paper and the control unit will also be configured to command a print of the digital image on photographic paper.

In one aspect, the camera and the control unit of the camera will together form a system, which will be called the Master System in the following, which represents the essential hardware installed in current automatic photo booths.

Compared to an automatic photo booth, such as those typically installed near public offices or in railway stations, the camera that implements the process disclosed here has a microprocessor-based electronic authentication device and a connection interface to a remote server.

In one aspect, the electronic authentication device is a distinct and separate electronic component from the control unit of the camera. In this case, to implement the process it is necessary to install the electronic authentication device and connect it to communicate with the control unit, which is typically already present in currently available cameras.

According to the procedure of this disclosure, a preliminary certification operation of the device must first be performed on a remote server connected to the interface of the camera, so that the camera is recognized by the authority that must acquire the photographs taken with the camera. To this end, the preliminary registration operation can be performed through the following process steps:
a private key generated by a manager of the device, where the manager is the subject who owns the camera, is stored in the microprocessor-based electronic authentication device;
a request for issuing an electronic certificate is transmitted to the remote server, managed by the authority that must acquire the certified photographs. According to one aspect, the issuing request contains identification data of the camera and the electronic authentication device of the camera, where the identification data are encrypted with the private key;
the electronic certificate issued by the authority managing the remote server is stored in the microprocessor-based electronic authentication device. In one aspect, this electronic certificate is transmitted to the electronic authentication device via the remote server, which transmits it to the camera via the interface.

Once this preliminary phase is completed, the camera has been registered by the authority and is ready to send photographs directly and in a certified manner to the authority.

The Managers of the identity photo cameras must accredit themselves through a specific online procedure available on the website of the Public Administration, thus obtaining the "Manager Certificate", a certificate that will be used to affix an electronic seal on the image file containing the photo to be transmitted.

According to one aspect, the Manager, using the services provided by the website of the Public Administration, communicates the identification data of the electronic microprocessor authentication device and of the Master Systems in its possession, to which it will add further and any other data requested by the system.

The minimum data to be provided for the purposes of the census, for example, can be the following:
- Manager data: name or surname/name, tax domicile and VAT number;
- Master System data: Master System registration number and all representative data including those of the camera. Therefore, the information to be filled in is:
   ▪ Device identifier: mandatory alphanumeric progressive number of maximum 30 characters, protected after the first insertion, to be filled in by indicating the concatenation between the Manager's VAT number and the Master System registration number. If the Master System is not equipped with an identification number, the latter is generated by the Manager, respecting the principles of uniqueness and unchangeability of the same;
   ▪ Geo-localization latitude and longitude;
   ▪ Communication protocol;
   ▪ Communication interface.

According to one aspect, the census concludes with the production of a QRCODE for each Master System, to be affixed as a label on the single Master System, which contains the address to a web page of the Public Administration on which it will be possible to verify the identification data of the camera and the Manager. The QRCODE, for example, will be printed on two RFID/TAG labels for the univocal association between the electronic microprocessor authentication device and the Master System.

According to one aspect, it is also possible to make status updates of the automatic photographic apparatus that implements the procedure of this disclosure.

At the time of the census, the status of the Master Systems is "Activated" and automatically becomes "In service" on the occasion of the first data transmission.

The Manager promptly updates the data of the Master System - present in the appropriate section of the Public Administration website - whenever an event occurs that involves a change of status (transfer for any reason, replacement, maintenance, exchange, theft, tampering, exceptional event, destruction of the Master Systems).

In addition to "Activated" and "In service", the statuses available in the system are the following:
▪ "Out of service": the Master System is out of service when it is unable to function (for example, in the event of a fault, tampering, maintenance, exceptional events - judicial seizures, earthquakes - etc.). From this state, the Master System may undergo the following changes in status:
   - Decommissioned, if the device must be scrapped
   - Deactivated, for circumstances that require such a change in status
   - In service, if the device starts transmitting again
▪ "Deactivated": this state involves the cancellation of the association between the Master System and the VAT number of the Manager; the Master System can be reactivated by the same manager using the appropriate "Master System Reactivation" function or by a new manager simply by carrying out a new census. This state includes, for example, the hypothesis of transfer for any reason and theft of the Master System. In the event that the Master System is found, following theft, by the original operator, the latter has the possibility of making it operational again by using the status change function:
   ▪ "Reactivation of the Master System";
   ▪ "Decommissioned": in this case, the Master System is no longer usable by any Operator.

The microprocessor authentication device contains, at the end of the preliminary census phase, a certificate that is essential for transmitting the "electronically sealed" images and data to the Public Administration information system.

According to one aspect, the physical integrity of each microprocessor electronic authentication device will be guaranteed by dedicated anti-tampering systems and each microprocessor electronic authentication device will be physically connected to a single Master System via RFID/TAG labels and logically via correlation between the IMEI of the SIM and the Master System Device Identifier.

In one aspect, the anti-tampering system shall be configured to make the microprocessor-based electronic authentication device physically inaccessible and configured such that the electronic authentication device will be physically damaged when the physical anti-tampering system is removed. For example, an anti-tampering system may be a conductive mesh that adheres to the electronic authentication device and has a very accurately measured resistance. An active circuit shall be dedicated to continuously examine the integrity of the mesh and generate a cryptographic key to decrypt the electronic authentication device's certificates during the authentication phase. If the electrical properties of the mesh were changed, the key would not be generated correctly and consequently a proper connection to the remote server would not be possible.

According to one aspect, the camera census phase can be performed in the following way. The Manager uploads its own Manager certificate to the microprocessor electronic authentication device and, for each microprocessor electronic authentication device, produces a request (CSR) for a device certificate to the Public Administration, containing the identification number of the microprocessor electronic authentication device; at the same time, the Manager generates its own pair of RSA keys and attaches the public key to the request. All the content of the request's CSR file is encoded, for example in base 64, and inserted into an xml file whose content is signed with the Manager certificate.

In relation to the creation of the registry, the Public Administration will also have generated a pair of RSA keys, composed of a public key and a private key. These keys will be used to encrypt and decrypt the exchanged data.

The Manager then sends a device certificate request to the Public Administration. This certificate will be used to digitally sign the taken photos.

The Public Administration verifies the authenticity of the device certificate request and, if valid, issues a certificate to the Manager. This certificate contains the manager's public key and is digitally signed by the Public Administration using its private key.

Once the camera has been registered, it can generate certified photographs, which are transmitted directly to the authority's remote server through the following operations:
- a photograph is taken of a user placed in front of the camera of the photographic apparatus, in a passport photo format compliant with what is required for the issuance of identity documents, generating a corresponding image file;
- through the electronic microprocessor authentication device, using the private key, the image file is encrypted together with the certificate, generating a corresponding encrypted file containing the image file and the certificate;
- through the interface of the photographic apparatus connected to the remote server, the encrypted file generated by the electronic microprocessor authentication device is transmitted to the server and information is received on the outcome of a verification of integrity criteria of the encrypted file transmitted to the remote server.

According to one aspect, it is the remote server of the authority that verifies the integrity criteria of the encrypted file received and the correctness of the certificate and private key used to generate the encrypted file, then transmits the information on the outcome of the verification to the electronic microprocessor authentication device.

For example, the above operations can be performed in the following way. When a Manager takes a photo for an identity document, the photo is encrypted using the manager's private key and the public key of the Public Administration received from it.

After encryption, the photographer digitally signs the photo using his own device certificate.

The encrypted and digitally signed photos are transmitted to the Public Administration via secure channels, such as an HTTPS connection.

Once the photos are received, the Public Administration uses the manager's public key and its own private key to decrypt them.

After decryption, the Public Administration verifies the digital signature of the photos using the photographer's device certificate.

Once verified, the photos can be processed and used to produce identity documents.

In summary, for example with this method the manager is required to:
a) generate a pair of 2048-bit RSA keys for each microprocessor electronic authentication device and insert the private key into the secure memory;
b) generate a certificate request
c) also record in the secure memory the certificates that allow the verification of the authenticity of the response messages from the Public Administration information system and, before that, that of the server with which the connection is established.

These certificates will be available in a special area of the Public Administration website for the preparation of the devices for data transmission.

According to one aspect, the activation of the electronic microprocessor authentication device, carried out by the Managers, requires the establishment of a protected connection to the Public Administration information system in web service mode and with only server authentication.

The Device Certificate received is recorded in the memory of the microprocessor electronic authentication device, in combination with the private key generated in the previous phase.

This operation modifies the status of the microprocessor electronic authentication device which becomes "active".

The information system of the Public Administration feeds the registry database with the identifier of the microprocessor electronic authentication device and with the association between the microprocessor electronic authentication device and the VAT number of the Manager of the photographic apparatus.

According to one aspect, the data transmission is carried out via the microprocessor electronic authentication device equipped with autonomous network connectivity and geo-localization.

Regardless of the data acquisition method, the microprocessor electronic authentication device generates a file, which may be for example an XML file, seals it electronically with the device certificate and transmits it electronically to the Public Administration system. An electronic seal is affixed to the XML file - using the device certificate - in order to guarantee the authenticity of the sender and non-repudiation, as well as the integrity of the data itself. According to one aspect, the connection occurs in HTTPS with TLS 1.2 protocol.

At the same time as the XML file is transmitted, the microprocessor electronic authentication device receives from the Public Administration information system the outcome that certifies that the validity of the seal and the formal structure of the transmitted files have been checked, recorded with a unique transmission identifier.

The outcome and the transmitted data may be consulted by the Manager using specific web functions made available through the Public Administration website.

According to one aspect, in the event that the Manager does not collect the data for a period exceeding 60 days, the latter, via the electronic microprocessor authentication device, must send the information relating to the interruption period at the first subsequent transmission. If the data is not sent for reasons not attributable to the Manager (for example, due to a network malfunction), the file generated and sealed by the electronic microprocessor authentication device (containing both the geo-localization of the place where the file was generated and the time of generation) will be transmitted to the Public Administration information system as soon as connectivity is re-established. If the Public Administration information system detects an error in the transmission or in the format of the data, a negative result will be sent.

According to one aspect, the Managers shall promptly update the data of the electronic microprocessor authentication device whenever an event occurs that causes a change of status (transfer for any reason, replacement, maintenance, exchange, theft, etc.).

According to one aspect, the microprocessor electronic authentication device can initially be found in the states:
▪ "Activated", when the microprocessor electronic authentication device is registered in the information system of the Public Administration and is associated with a Manager;
▪ "In service", when the microprocessor electronic authentication device has made at least one data transmission.

Subsequently, through specific procedures, it is possible to carry out the following changes of state for the management of possible events that may involve the microprocessor electronic authentication device:
▪ "Out of service",
▪ "Off-line",
▪ "Deactivated",
▪ "Decommissioned".

According to an embodiment of a working prototype of the process of this disclosure and of the photographic apparatus that implements it, the following services are available:
a) Manager Accreditation:
   I. A natural person authenticates on the Public Administration website as a Manager, communicating his/her VAT number or that of the company he/she represents; the Public Administration information system verifies the suitability of the request, checking the tax identification number (VAT number). If the verification is positive, the system allows access in order to request a "manager" certificate and to carry out the necessary operations.
b) Device census:
   I. Master System:
      The Public Administration information system provides a service that allows only the communication of the identification data of the Master Systems for the purpose of their census.
   II. Electronic microprocessor authentication device:
      The Public Administration information system provides a service that can be called up exclusively from the electronic microprocessor authentication device via the manager certificate to request the single certificate associated with the device. This functionality is used in the device activation phase and allows the data to be entered in the registry for the census.
c) Activation/Authentication of the microprocessor electronic authentication device:
   The Public Administration information system provides a service, which can be called up via the device certificate, to communicate the activation data of the microprocessor electronic authentication device. The Public Administration information system associates the device with the VAT taxable person who owns the camera and the status of the device is updated as "Active".
d) Transmission of image and data files (putting the device into service):
   The Public Administration information system provides a service, which can be called up via the device certificate, which allows data to be transmitted. With the first transmission, the status of the device is updated as "In service".
e) Management of devices:
   The Manager, having authenticated himself on the Public Administration website, can communicate changes in the status of devices associated with his VAT number: transfer, theft, failure, etc.

## Claims

1. A method of certified generation of photographs, including:
providing and installing a photographic apparatus, including a camera configured to generate image files with a pixel definition equal to or greater than a minimum definition of photographs for identity documents, a control unit of the apparatus configured to receive at least one captured digital image from said camera, an electronic authentication microprocessor device, an interface configured to connect said electronic authentication microprocessor device to a remote server;
performing a preliminary certification operation of the apparatus on a server connected to the interface, wherein said server is managed by a certification authority and wherein said preliminary certification operation includes the following steps:
storing in said electronic authentication microprocessor device a corresponding private key generated by a manager of said apparatus, wherein said corresponding private key is provided by the manager only to said electronic authentication microprocessor device;
transmitting to said server a request to issue an electronic certificate, wherein said request contains identification data of the camera and of the electronic authentication microprocessor device of the camera, wherein said identification data is encrypted with said private key and can be read as a plain text only with a corresponding public key;
storing in said electronic authentication microprocessor device said electronic certificate issued by said authority and transmitted to the electronic authentication microprocessor device via said server, wherein said electronic certificate can be validated as authentic only by said authority;
said method further comprising the following operations to be performed after said preliminary phase:
taking with said camera a photograph, in a passport photo format suitable for identity documents and with said pixel definition, of a user placed in front of the camera, generating a corresponding image file;
through said electronic authentication microprocessor device, encrypting with said private key the image file together with said certificate, generating a corresponding encrypted file containing the image file and the certificate;
via said interface, transmitting to said server the encrypted file generated by the electronic authentication microprocessor device and receiving information on the outcome of an integrity criteria check of the encrypted file transmitted to said server.

2. The method according to claim 1, further comprising the operation of:
with said server, verifying said integrity criteria of the received encrypted file and correctness of the certificate and of the private key used to generate the encrypted file, then transmitting said information on the outcome of said verification to said electronic authentication microprocessor device.

3. The method according to one of the previous claims, wherein said identification data are chosen from the set consisting of unique identification codes of the photographic apparatus, including an IMEI code, and geolocation coordinates of the photographic apparatus.

4. The method according to the previous claim, further comprising the operation of including, in said encrypted file transmitted by the photographic apparatus, at least said geolocation coordinates.

5. The method according to one of the preceding claims, wherein said photographic apparatus is an automatic photo booth, comprising a printer on photographic paper of said digital image and wherein said control unit of the apparatus is further configured to control a printout of said digital image on photographic paper, the method further comprising the operation of printing said digital image on photographic paper.

6. A photographic apparatus, including:
a camera configured to generate image files with a pixel definition equal to or greater than a minimum pixel definition of photographs for identity documents, wherein said camera is further configured to take a photograph, in passport photo format and with said pixel definition, of a user placed in front of the camera and to generate a corresponding image file;
a control unit configured to receive said digital image captured by said camera and to control a printout of said digital image on photographic paper;
an electronic authentication microprocessor device, configured to:
- store a private key generated by a manager of said apparatus,
- store an electronic certificate issued by an authority,
- encrypt with said private key the image file together with said certificate, generating a corresponding encrypted file containing the image file and the certificate;
an interface configured to connect said electronic authentication microprocessor device to a server;
wherein said control unit is configured to communicate with said server connected through the interface to transmit to said server the encrypted file generated by the electronic authentication microprocessor device and to receive information on an outcome of an integrity criteria verification of the encrypted file transmitted to that server.

7. The photographic apparatus according to claim 6, wherein said apparatus is an automatic self-service photo booth, including a photographic paper printer of said digital image and wherein said control unit of the apparatus is further configured to control a printout of said digital image on photographic paper.

8. The photographic apparatus according to any one of claims 6 to 7, further comprising a physical anti-tampering device configured to make said electronic authentication microprocessor device physically inaccessible and configured such that the electronic authentication microprocessor device is physically damaged when the physical anti-tampering device is removed.

9. A remotely connected hardware system for acquiring certified photographs, comprising:
at least one photographic apparatus according to one of claims 6 to 8;
a server connected to the interface of the at least one camera, wherein said server is configured to verify the integrity criteria of the encrypted file sent by the at least one camera and the correctness criteria of the certificate and private key used to generate the encrypted file, and is configured to transmit the respective information on the outcome of a verification to the electronic authentication microprocessor device of the at least one photographic apparatus.
